(19)

Europäisches
Patentamt
European
Patent Office
Office européen
des brevets

(11) **EP 4 769 285 A1**

(12) **EUROPEAN PATENT APPLICATION**

(43) Date of publication:
**01.07.2026   Bulletin 2026/27**

(21) Application number: **25227157.2**

(22) Date of filing: **24.12.2025**

(51) International Patent Classification (IPC):
**G06Q 40/12** (2023.01)        **G06N 20/00** (2019.01)

(52) Cooperative Patent Classification (CPC):
**G06Q 40/12; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024   US 202419004484**

(71) Applicant: Highradius Corporation
**Houston, TX 77042 (US)**

(72) Inventors:
• **Bose, Debanwesh**
**500081 Hyderabad (IN)**

• **Amrit, Pratyush**
**500081 Hyderabad (IN)**
• **Mondal, Sayantan**
**500081 Hyderabad (IN)**
• **Baral, Sujatro**
**500081 Hyderabad (IN)**
• **Gouda, Ansumun**
**500081 Hyderabad (IN)**
• **Vankina, Lohit**
**500081 Hyderabad (IN)**
• **Gandepally, Vamsi Ramkiran Bharadwaj**
**500081 Hyderabad (IN)**

(74) Representative: **Caldon, Giuliano et al
Gallo & Partners S.r.l.
Via Rezzonico, 6
35131 Padova (IT)**

(54) **MACHINE-LEARNING-BASED SYSTEM AND METHOD FOR AUTOMATICALLY EXTRACTING FIELDS FROM DOCUMENTS**

(57)     A machine-learning based (ML-based) system and method for automatically extracting one or more data fields from one or more documents, are disclosed. The ML-based system includes a document obtaining subsystem to obtain documents, a document pre-processing subsystem to generate pre-processed data, a field identifying subsystem to identify data fields using a trained ML model, and a field extracting subsystem to extract financial information. The ML-based system also comprises an output subsystem to deliver the extracted data to end users via user interfaces. The ML model is trained using historical documents, labelled data fields, and features such as distance-based features, direction-based features, dimension-based features, positional features, and value-based features. The M-based system employs hyperparameter optimization, noise removal, and accuracy assessment mechanisms to enhance performance. This ML-based system provides a scalable, accurate, and automated solution for financial information extraction, ensuring efficiency, adaptability, and seamless integration with enterprise systems.

100

One or More
Electronic
Devices 102

Network
106

One or More
Data Sources 108

ML-Based System 104

Plurality of
Subsystems
110

**FIG. 1**

EP 4 769 285 A1

**Description**

**FIELD OF INVENTION**

Embodiments of the present disclosure relate to machine learning-based (ML-based) systems, and more particularly relate to a machine-learning-based (ML-based) system and a method for automatically extracting one or more fields from one or more documents.

**BACKGROUND**

In recent years, financial institutions, especially in insurance sectors, have increasingly relied on insurance remittance documents for business transactions, such as claims processing, payments, and remittance management. These remittance documents often contain critical data fields such as financial information, including policy numbers, amounts, commissions, and effective dates, which are crucial for financial reconciliation and other operational workflows. However, identifying and extracting these data fields accurately has been fraught with several challenges due to the limitations of existing technologies.

One of the primary limitations is the unstructured and arbitrary placement of data fields within these remittance documents. Unlike standardized forms, remittance documents often vary significantly in their layout, making it difficult for traditional rule-based extraction systems to pinpoint the location of required fields. Additionally, the presence of similar or overlapping field names (e.g., "Commission" and "Commission %") introduces ambiguity, which leads to inaccuracies in extraction. This ambiguity is further exacerbated by the varying nomenclature used for similar data fields across different remittance documents, such as "Policy Number," "Policy #," or "Insurance No." for a reference field. These inconsistencies present significant challenges to systems relying on fixed rules or templates.

In the existing technology, a method for document processing techniques, such as Optical Character Recognition (OCR) combined with rule-based parsing, has proven inadequate in addressing these issues such as identifying and extracting the data fields. The OCR with rule-based parsing approaches often fails data fields to handle the variability in remittance document structure. Additionally, conventional OCRs using the rule-based parsing approaches does not have ability to contextually understand the data fields and distinguish between lexically similar data fields. Furthermore, such systems typically require extensive manual intervention to create and update rules for each variation, leading to high operational costs and reduced scalability.

Another significant limitation in existing data extracting systems is their inability to effectively clean and preprocess data from the remittance documents. Noise, such as irrelevant characters, punctuations, and recurring separators, often remains in the extracted data fields, further complicating downstream processing. These inefficiencies not only reduce the accuracy of extracted data fields but also require additional post-extraction validation and correction, which leads to time-consuming.

The inability of prior systems to handle these challenges comprehensively has created a significant bottleneck in automating financial workflows, particularly in industries like insurance, where large volumes of diverse and unstructured documents are processed daily.

Therefore, there is a need for a machine-learning based (ML-based) system and method for automatically extracting the data fields from the remittance documents, irrespective of document variability or structure, in order to address the aforementioned issues.

**SUMMARY**

This summary is provided to introduce a selection of concepts, in a simple manner, which is further described in the detailed description of the disclosure. This summary is neither intended to identify key or essential inventive concepts of the subject matter nor to determine the scope of the disclosure.

In accordance with an embodiment of the present disclosure, a machine-learning based (ML-based) method for automatically extracting one or more data fields from one or more documents, is disclosed. The ML-based comprises obtaining, by one or more hardware processors, the one or more documents from one or more data sources.

The ML-based method comprises pre-processing, by the one or more hardware processors, the one or more documents to generate pre-processed data associated with one or more contents.

The ML-based method comprises identifying, by the one or more hardware processors, the one or more data fields in the one or more documents based on one or more custom prompts, using a machine learning (ML) model.

The ML-based method comprises extracting, by the one or more hardware processors, the identified one or more data fields corresponding to one or more financial information from the one or more documents, using the ML model

The ML-based method comprises providing, by the one or more hardware processors, the extracted one or more data fields corresponding to the one or more financial information as an output, to one or more end users on one or more user interfaces associated with one or more electronic devices associated with the one or more end users

The ML-based method comprises training, by the one or more hardware processors, the ML model by: a) obtaining, by the one or more hardware processors, historical data comprising one or more historical documents for training, from the one or more data sources, b) converting, by the one or more hardware processors, the historical data into one or more phrases with one or more spatial coordinates of words in reference to each historical document of the one or more historical documents, c) labelling, by the one or more hardware processors, each phrase of the one or more phrases as the one or more data fields, by: i) vectorizing, by the one or more hardware processors, at least one of: each phrase of the one or more phrases and one or more variations of the one or more data fields, ii) matching, by the one or more hardware processors, the one or more phrases in the one or more historical documents with each variation of the one or more variations of the one or more data fields, using a cosine similarity matching technique, and iii) labelling, by the one or more hardware processors, each phrase of the one or more phrases, as the one or more data fields based on a similarity level between each phrase of the one or more phrases with the one or more variations of the one or more data fields, d) providing, by the one or more hardware processors, one or more features to each phrase of the one or more phrases based on the one or more spatial coordinates of words, wherein the one or more features comprise at least one of: one or more distance based features, one or more direction based features, one or more dimension based features, one or more positional features, and one or more value based features, and e) training, by the one or more hardware processors, the ML model to classify the one or more phrases, based on the one or more features and one or more target classes.

The ML-based method comprises training, by the one or more hardware processors, the ML model using one or more hyperparameters. The one or more hyperparameters comprising at least one of: n estimators indicating a number of trees in a forest model, criterion indicating a function to assess quality of a split, minimum impurity decrease indicating an occurrence of the split when impurity decrease is at least one of: greater than a pre-determined value, and equal to the pre-determined value, optimum samples indicating a number of samples identified for splitting a node, optimum features optimum indicating optimum number of features identified for splitting the node, optimum depth indicating optimum number of levels in each decision tree, minimum samples split indicating minimum number of data points placed in the node prior to split of the node, and minimum samples leaf indicating minimum number of the data points allowed in a leaf node. The one or more hyperparameters are automatically adjusted to determine one or more optimized hyperparameters in a subset value of each of one or more hyperparameters.

In one embodiment, pre-processing the one or more documents comprises extracting, by the one or more hardware processors, data from the one or more documents, using a document scraper model, wherein the data comprise at least one of: one or more words, one or more phrases, one or more numbers, and one or more characters with metadata.

In yet another embodiment, pre-processing the one or more documents comprises grouping, by the one or more hardware processors, the data based on at least one of: parts of speech of at least one of: the one or more words and the one or more phrases, relationship between at least one of: the one or more words and the one or more phrases, and meaning of at least one of: the one or more words and the one or more phrases, using one or more custom rules.

In yet another embodiment, pre-processing the data associated with the one or more documents further comprises at least one of: a) replacing, by the one or more hardware processors, each character in the one or more contents with one or more corresponding Unicode string values, based on one or more custom noise removal rules, b) removing, by the one or more hardware processors, one or more punctuations before the one or more phrases in the one or more contents, based on the one or more custom noise removal rules, and c) removing, by the one or more hardware processors, one or more recurred characters, from the one or more contents, based on the one or more custom noise removal rules.

In yet another embodiment, the further comprising: a) assessing, by the one or more hardware processors, an accuracy of extracted one or more financial information by comparing the extracted one or more data fields corresponding to the one or more financial information with one or more reference fields corresponding to one or more reference financial information, b) generating, by the one or more hardware processors, one or more evaluation reports providing one or more insights into the accuracy of the extracted one or more data fields corresponding to the one or more financial information, c) automatically generating, by the one or more hardware processors, one or more feedback in at least one of: real-time and periodic, on the one or more evaluation reports to provide one or more suggestions on the extraction process, and d) monitoring, by the one or more hardware processors, performance of the extraction process over time to determine one or more changes in accuracy metrics and error patterns.

In one aspect, a machine learning based (ML-based) system for automatically extracting one or more data fields from one or more documents, is disclosed. The ML-based system includes one or more hardware processors, and a memory coupled to the one or more hardware processors. The memory includes a plurality of subsystems in the form of programmable instructions executable by the one or more hardware processors.

The plurality of subsystems comprises a document obtaining subsystem is configured to obtain the one or more documents from the one or more data sources.

The plurality of subsystems comprises a document pre-processing subsystem is configured to pre-process the one or more documents to generate pre-processed data associated with one or more contents.

The plurality of subsystems comprises a field identifying subsystem is configured to the one or more data fields in the one or more documents based on one or more custom prompts, using a machine learning (ML) model.

The plurality of subsystems comprises a field extracting subsystem is configured to the identified one or more data fields corresponding to one or more financial information from the one or more documents, using the ML model.

The plurality of subsystems comprises an output subsystem is configured to provide the extracted one or more data fields corresponding to the one or more financial information as the output, to the one or more end users on the one or more user interfaces associated with the one or more electronic devices associated with the one or more end users.

In another aspect, a non-transitory computer-readable storage medium having instructions stored therein that, when executed by the one or more hardware processors, causes the one or more hardware processors to execute method steps as described above.

To further clarify the advantages and features of the present disclosure, a more particular description of the disclosure will follow by reference to specific embodiments thereof, which are illustrated in the appended figures. It is to be appreciated that these figures depict only typical embodiments of the disclosure and are therefore not to be considered limiting in scope. The disclosure will be described and explained with additional specificity and detail with the appended figures.

## BRIEF DESCRIPTION OF DRAWINGS

The disclosure will be described and explained with additional specificity and detail with the accompanying figures in which:

FIG. 1 is a block diagram illustrating a computing environment with a machine learning based (ML-based) system for automatically extracting one or more data fields from one or more documents, in accordance with an embodiment of the present disclosure;

FIG. 2 is a detailed view of the ML-based system for automatically extracting the one or more data fields from the one or more documents, in accordance with another embodiment of the present disclosure;

FIG. 3 is a process flow depicting training of the ML-based system for automatically extracting the one or more data fields from the one or more documents, in accordance with another embodiment of the present disclosure;

FIGs. 4A- 4B are exemplary input documents for automatically extracting the one or more data fields, in accordance with another embodiment of the present disclosure; and

FIG. 5 is a flow chart illustrating a ML-based method for automatically extracting the one or more data fields from the one or more documents, in accordance with an embodiment of the present disclosure.

Further, those skilled in the art will appreciate that elements in the figures are illustrated for simplicity and may not have necessarily been drawn to scale. Furthermore, in terms of the construction of the device, one or more components of the device may have been represented in the figures by conventional symbols, and the figures may show only those specific details that are pertinent to understanding the embodiments of the present disclosure so as not to obscure the figures with details that will be readily apparent to those skilled in the art having the benefit of the description herein.

## DETAILED DESCRIPTION OF THE DISCLOSURE

For the purpose of promoting an understanding of the principles of the disclosure, reference will now be made to the embodiment illustrated in the figures and specific language will be used to describe them. It will nevertheless be understood that no limitation of the scope of the disclosure is thereby intended. Such alterations and further modifications in the illustrated system, and such further applications of the principles of the disclosure as would normally occur to those skilled in the art are to be construed as being within the scope of the present disclosure. It will be understood by those skilled in the art that the foregoing general description and the following detailed description are exemplary and explanatory of the disclosure and are not intended to be restrictive thereof.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

The terms "comprise", "comprising", or any other variations thereof, are intended to cover a non-exclusive inclusion, such that one or more devices or sub-systems or elements or structures or components preceded by "comprises... a" does not, without more constraints, preclude the existence of other devices, sub-systems, additional sub-modules. Appearances of the phrase "in an embodiment", "in another embodiment" and similar language throughout this specification may, but not necessarily do, all refer to the same embodiment.

Unless otherwise defined, all technical and scientific terms used herein have the same meaning as commonly understood by those skilled in the art to which this disclosure belongs. The system, methods, and examples provided herein are only illustrative and not intended to be limiting.

A computer system (standalone, client or server computer system) configured by an application may constitute a "module" (or "subsystem") that is configured and operated to perform certain operations. In one embodiment, the "module" or "subsystem" may be implemented mechanically or electronically, so a module include dedicated circuitry or logic that is permanently configured (within a special-purpose processor) to perform certain operations. In another embodiment, a "module" or "subsystem" may also comprise programmable logic or circuitry (as encompassed within a general-purpose processor or other programmable processor) that is temporarily configured by software to perform certain operations.

Accordingly, the term "module" or "subsystem" should be understood to encompass a tangible entity, be that an entity that is physically constructed permanently configured (hardwired) or temporarily configured (programmed) to operate in a certain manner and/or to perform certain operations described herein.

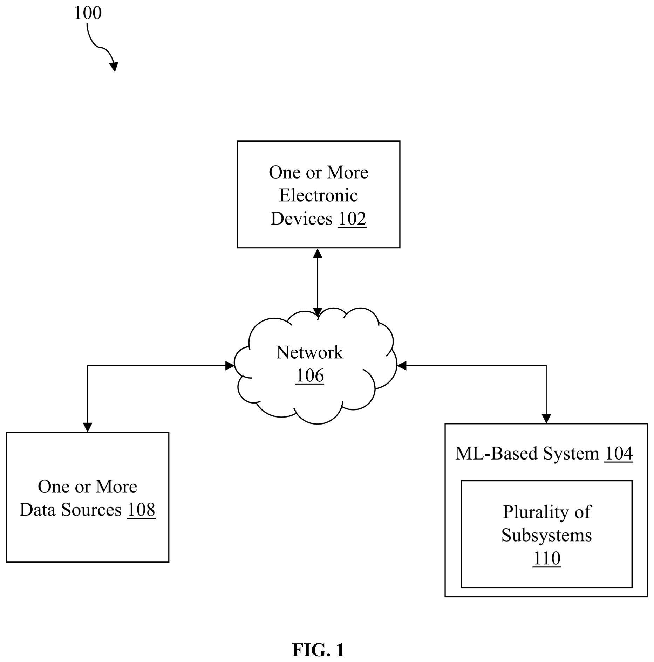

Referring now to the drawings, and more particularly to **FIG. 1** through **FIG. 5,** where similar reference characters denote corresponding features consistently throughout the figures, there are shown preferred embodiments, and these embodiments are described in the context of the following exemplary system and/or method.

**FIG. 1** is a block diagram illustrating a computing environment 100 with a machine learning based (ML-based) system 104 for automatically extracting one or more data fields from one or more documents, in accordance with an embodiment of the present disclosure.

According to an exemplary embodiment of the present disclosure, the computing environment 100 may include one or more electronic devices 102, the ML-based system 104, and one or more data sources 108. According to **FIG. 1,** the computing environment 100 includes the one or more electronic devices 102 that are communicatively coupled to the ML-based system 104 through a network 106. The one or more electronic devices 102 through which one or more end users receive output results from the ML-based system 104. In another embodiment, the one or more documents comprises at least one of: email remittance, Optical Character Recognition (OCR) remittance, payment notes, invoices, remittance advice, remittance documents, bank statements, payment vouchers, payroll documents, credit memos, purchase orders, expense reports, budgets, financial statements, insurance payment summary, claim remittance advice, payment notification , remittance statement, claim settlement document, payment explanation document, insurance billing summary, remittance advice notice, payment breakdown statement, insurance fund distribution notice and the like.

In an exemplary embodiment, the ML-based system 104 may be deployed via one or more servers. The one or more servers comprise one or more hardware processors and a memory unit that includes a set of computer-readable instructions executable by the one or more hardware processors to automatically extract the one or more data fields from the one or more documents.

The one or more hardware processors may comprise a combination of discrete components, an integrated circuit, an application-specific integrated circuit, a field-programmable gate array, a digital signal processor, or other suitable one or more hardware processors and a software. The "software" may comprise one or more objects, agents, threads, lines of code, subroutines, separate software applications, two or more lines of code, or other suitable software structures operating in one or more software applications or the one or more hardware processors. The memory unit is operatively connected to the one or more hardware processors. The memory unit comprises the set of computer-readable instructions in form of a plurality of subsystems 110, configured to be executed by the one or more hardware processors.

In an exemplary embodiment, the one or more hardware processors may include, for example, microprocessors, microcomputers, microcontrollers, digital signal processors, central processing units, state machines, logic circuits, and/or any devices that manipulate data or signals based on operational instructions. Among other capabilities, the one or more hardware processors may fetch and execute computer-readable instructions in the memory unit operationally coupled with the ML-based system 104 for automatically extracting the one or more data fields from the one or more documents. The one or more hardware processors is high-performance processors capable of handling large volumes of data and complex computations. The one or more hardware processors may be, but not limited to, at least one of: multi-core central processing units (CPU), graphics processing units (GPUs), and specialized Artificial Intelligence (AI) accelerators that enhance an ability of the ML-based system 104 to process real-time data from a plurality of sources simultaneously.

In an exemplary embodiment, the one or more data sources 108 may configured to store, and manage data related to various aspects of the ML-based system 104. The one or more data sources 108 may store at least one of, but not limited to, historical data, training datasets used for a machine learning model, labelled datasets for supervised learning, extracted metadata from the one or more documents, reference dictionaries for variations of business fields, validation datasets for accuracy assessment, and user feedback for continuous ML model improvement. The one or more data sources 108 may also include structured and unstructured data repositories that maintain information such as one or more document templates, business rules, and prior extraction results. Additionally, the one or more data sources 108 may store operational logs, error reports, and evaluation metrics generated during extraction process of the one or more data fields from one or more documents. Additionally, the one or more data sources 108 enable the ML-based system 104 to dynamically retrieve, analyze, and update the stored data in real-time, facilitating continuous extraction of the one or more data fields from the one or more documents. The one or more data sources 108 may include different types of databases such as, but not limited to, relational databases (e.g., Structured Query Language (SQL) databases), non-Structured Query Language (NoSQL) databases (e.g., MongoDB, Cassandra), time-series databases (e.g., InfluxDB), an Open-Search database, object storage systems (e.g., Amazon S3, PostgresDB), and the like. Furthermore, the one or more data sources 108 may facilitate integration with external systems through APIs, allowing the ingestion of new data types such as payment vouchers, financial statements, and remittance documents from third-party databases. The one or more data sources 108 play a critical role in ensuring the adaptability and scalability of the ML-based system 104 by providing comprehensive data support for both initial ML model training and ongoing ML-based system 104 updates.

In an exemplary embodiment, the one or more electronic devices 102 are configured to enable the one or more end users to interact with the ML-based system 104. The one or more electronic devices 102 may be digital devices, computing devices, and/or networks. The one or more electronic devices 102 may include, but not limited to, a mobile device, a smartphone, a personal digital assistant (PDA), a tablet computer, a phablet computer, a wearable computing device, a virtual reality/augmented reality (VR/AR) device, a laptop, a desktop, and the like. The one or more electronic devices 102 are configured with a user interface configured to enable seamless interaction between the one or more end users and the ML-based system 104. The user interface may include the graphical user interfaces (GUIs), voice-based interfaces, and touch-based interfaces, depending on the capabilities of the one or more electronic devices 102 being used. The GUIs may be configured to display outputs, including at least one of: document types, unique identifiers, payee names, payer names, invoice dates, due dates, total amount, tax amount, payment methods, transaction identifiers, item descriptions, and the like.

In an embodiment, the one or more end users may include at least one of: one or more data analysts, one or more business analysts, one or more cash analysts, one or more financial analysts, one or more collection analysts, one or more debt collectors, one or more professionals associated with cash and collection management, one or more customers, one or more organizations, one or more corporations, one or more parent companies, one or more subsidiaries, one or more joint ventures, one or more partnerships, one or more governmental bodies, one or more associations, and one or more legal entities, and the like.

In an exemplary embodiment, the one or more electronic devices 102 may be associated with, but not limited to, one or more service providers, one or more customers, an individual, an administrator, a vendor, a technician, a specialist, an instructor, a supervisor, a team, an entity, an organization, a company, a facility, a bot, any other user, and combination thereof. The entity, the organization, and the facility may include, but not limited to, an e-commerce company, online marketplaces, service providers, retail stores, a merchant organization, a logistics company, warehouses, transportation company, an airline company, a hotel booking company, a hospital, a healthcare facility, an exercise facility, a laboratory facility, a company, an outlet, a manufacturing unit, an enterprise, an organization, an educational institution, a secured facility, a warehouse facility, a supply chain facility, any other facility/organization and the like.

In an exemplary embodiment, the networks 106 may be, but not limited to, a wired communication network and/or a wireless communication network, a local area network (LAN), a wide area network (WAN), a Wireless Local Area Network (WLAN), a metropolitan area network (MAN), a telephone network, such as the Public Switched Telephone Network (PSTN) or a cellular network, an intranet, the Internet, a fiber optic network, a satellite network, a cloud computing network, or a combination of networks. The wired communication network may comprise, but not limited to, at least one of: Ethernet connections, Fiber Optics, Power Line Communications (PLCs), Serial Communications, Coaxial Cables, Quantum Communication, Advanced Fiber Optics, Hybrid Networks, and the like. The wireless communication network may comprise, but not limited to, at least one of: wireless fidelity (wi-fi), cellular networks (including fourth generation (4G) technologies and fifth generation (5G) technologies), Bluetooth, ZigBee, long-range wide area network (LoRaWAN), satellite communication, radio frequency identification (RFID), 6G (sixth generation) networks, advanced IoT protocols, mesh networks, non-terrestrial networks (NTNs), near field communication (NFC), and the like.

In an exemplary embodiment, the ML-based system 104 may be implemented by way of a single device or a combination of multiple devices that may be operatively connected or networked together. The ML-based system 104 may be implemented in hardware or a suitable combination of hardware and software.

Though few components and the plurality of subsystems 110 are disclosed in FIG. 1, there may be additional components and subsystems which is not shown, such as, but not limited to, ports, routers, repeaters, firewall devices, network devices, the one or more data sources 108, network attached storage devices, assets, machinery, instruments, facility equipment, emergency management devices, image capturing devices, any other devices, and combination thereof. The person skilled in the art should not be limiting the components/subsystems shown in **FIG. 1.** Although **FIG. 1** illustrates the ML-based system 104, and the one or more one or more electronic devices 102 connected to the one or more data sources 108, one skilled in the art can envision that the ML-based system 104, and the one or more electronic devices 102 may be connected to several end user devices located at various locations and several databases via the network 106.

Those of ordinary skilled in the art will appreciate that the hardware depicted in **FIG.1** may vary for particular implementations. For example, other peripheral devices such as an optical disk drive and the like, the local area network (LAN), the wide area network (WAN), wireless (e.g., wireless-fidelity (Wi-Fi)) adapter, graphics adapter, disk controller, input/output (I/O) adapter also may be used in addition or place of the hardware depicted. The depicted example is provided for explanation only and is not meant to imply architectural limitations concerning the present disclosure.

Those skilled in the art will recognize that, for simplicity and clarity, the full structure and operation of all data processing systems suitable for use with the present disclosure are not being depicted or described herein. Instead, only so much of the ML-based system 104 as is unique to the present disclosure or necessary for an understanding of the present disclosure is depicted and described. The remainder of the construction and operation of the ML-based system 104 may conform to any of the various current implementations and practices that were known in the art.

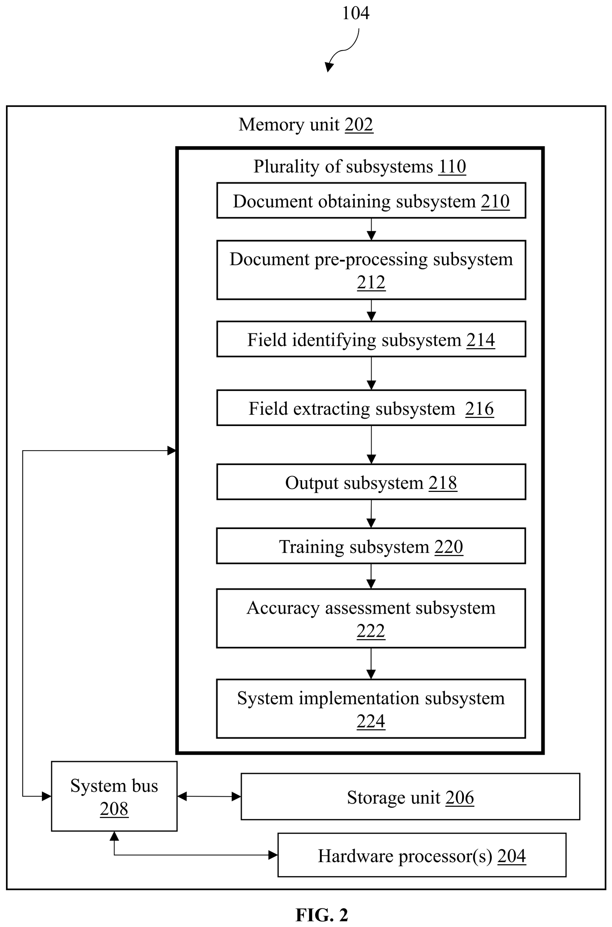

**FIG. 2** is a detailed view of the ML-based system 104 for automatically extracting the one or more data fields from the one or more documents, in accordance with another embodiment of the present disclosure.

The ML-based system 104 includes the memory unit 202, the one or more hardware processors 204, and a storage unit 206. The memory unit 202, the one or more hardware processors 204, and the storage unit 206 are communicatively coupled through a system bus 208 or any similar mechanism. The memory unit 202 includes the plurality of subsystems 110 in the form of programmable instructions executable by the one or more hardware processors 204. The system bus 208 facilitates the efficient exchange of information and instructions, enabling the coordinated operation of the ML-based system 104. The system bus 208 may be implemented using various technologies, including but not limited to, parallel buses, serial buses, or high-speed data transfer interfaces such as, but not limited to, at least one of a: universal serial bus (USB), peripheral component interconnect express (PCIe), and similar standards.

In an exemplary embodiment, the memory unit 202 is operatively connected to the one or more hardware processors 204. The memory unit 202 comprises the plurality of subsystems 110 in the form of programmable instructions executable by the one or more hardware processors 204. The plurality of subsystems 110 comprises a document obtaining subsystem 210, a document pre-processing subsystem 212, a field identifying subsystem 214, a field extracting subsystem 216, an output subsystem 218, a training subsystem 220, an accuracy assessment subsystem 222, and a system implementation subsystem 224. The brief details of the plurality of subsystems 110 have been elaborated in a below table.

| Plurality of Subsystems 110 | Functionality |
|---|---|
| Document obtaining subsystem 210 | The document obtaining subsystem 210 is configured to obtain the one or more documents from the one or more data sources 108. |
| Document pre-processing subsystem 212 | The document pre-processing subsystem 212 is configured to pre-process the one or more documents to generate pre-processed data associated with one or more contents. |
| Field identifying subsystem 214 | The field identifying subsystem 214 is configured to the one or more data fields in the one or more documents based on one or more custom prompts, using the ML model |
| Field extracting subsystem 216 | The field extracting subsystem 216 is configured to the identified one or more data fields corresponding to one or more financial information from the one or more documents, using the ML model. |
| Output subsystem 218 | The output subsystem 218 is configured to provide the extracted one or more data fields corresponding to the one or more financial information as an output, to one or more end users on one or more user interfaces associated with the one or more electronic devices 102 associated with the one or more end users. |
| Training subsystem 220 | The training subsystem 220 is configured to train the ML model for automatically extracting the one or more data fields from the one or more documents. |
| Accuracy assessment subsystem 222 | The accuracy assessment subsystem 222 is configured to assess an accuracy of the extracted one or more financial information by comparing the extracted one or more data fields corresponding to the one or more financial information with one or more reference fields corresponding to one or more reference financial information. |
| System implementation subsystem 224 | The system implementation subsystem 224 is configured to deploy and integrate the ML-based system 104 to a cloud production environment. |

The one or more hardware processors 204, as used herein, means any type of computational circuit, such as, but not limited to, the microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The one or more hardware processors 204 may also include embedded controllers, such as generic or programmable logic devices or arrays, application-specific integrated circuits, single-chip computers, and the like.

The memory unit 202 may be the non-transitory volatile memory and the non-volatile memory. The memory unit 202 may be coupled to communicate with the one or more hardware processors 204, such as being a computer-readable storage medium. The one or more hardware processors 204 may execute machine-readable instructions and/or source code stored in the memory unit 202. A variety of machine-readable instructions may be stored in and accessed from the memory unit 202. The memory unit 202 may include any suitable elements for storing data and machine-readable instructions, such as read-only memory, random access memory, erasable programmable read-only memory, electrically erasable programmable read-only memory, a hard drive, a removable media drive for handling compact disks, digital video disks, diskettes, magnetic tape cartridges, memory cards, and the like. In the present embodiment, the memory unit 202 includes the plurality of subsystems 110 stored in the form of machine-readable instructions on any of the above-mentioned storage media and may be in communication with and executed by the one or more hardware processors 204.

The storage unit 206 may be a cloud storage or the one or more data sources 108 such as those shown in **FIG. 1.** The storage unit 206 may store, but not limited to, recommended course of action sequences dynamically generated by the ML-based system 104. These action sequences may comprise at least one of: pre-processing the one or more documents, identification of the one or more data fields, extraction of the one or more data fields, training and re-training of the ML model, and the like. The dynamically generated action sequences may be used to optimize the evaluation of the ML-based system 104, improve response accuracy, enhance accuracy of extraction of the one or more data fields from the one or more documents using the ML-based system 104. Additionally, the storage unit 206 may retain previous action sequences for comparison and future reference, enabling continuous refinement of the ML-based system 104 over time. The storage unit 206 may be any kind of database such as, but not limited to, relational databases, dedicated databases, dynamic databases, monetized databases, scalable databases, cloud databases, distributed databases, any other databases, and a combination thereof.

In an exemplary embodiment, the document obtaining subsystem 210 that is communicatively connected to the one or more hardware processors 204. The document obtaining subsystem 210 is configured to obtain the one or more documents from the one or more data sources 108. In an embodiment, the one or more data sources 108 may be one or more financial data repositories, which are integrated in the ML-based system 104. In an embodiment, the one or more documents may be the one or more financial documents (e.g., the one or more remittance documents) that include at least one of: one or more invoices, one or more payment confirmations, one or more general communications, and the like.

In an embodiment, the one or more data sources 108 may store the one or more documents in one or more formats and languages, and the document obtaining subsystem 210 of the ML-based system 104 may be configured to automatically identify and retrieve the one or more relevant documents. The document obtaining subsystem 210 may be configured to store the one or more documents composed in any languages (e.g., English, Spanish, French etc). The document obtaining subsystem 210 may be configured to allow the one or more end users to manually upload the one or more documents through the one or more user interfaces. The one or more user interfaces may provide validation and error checking, ensuring that only valid document formats are uploaded. The document obtaining subsystem 210 may be configured to retrieve the one or more documents from one or more third-party databases through one or more application programming interfaces (APIs). The document obtaining subsystem 210 may be configured to support a range of application programming interfaces (APIs) which may be used for retrieving the one or more documents in one or more formats.

The document obtaining subsystem 210 is configured to handle an input of the data files associated with the one or more documents. In an embodiment, the data files associated with the one or more documents may be in at least one of: a portable document format (PDF), an electronic mail format (EML), a text format, an image format, and the like. In an embodiment, the ML-based system 104 may be configured to provide feedback to the one or more end users through the one or more electronic devices 102 if the one or more documents are not in a format that may be handled by the ML-based system 104. In an embodiment, the document obtaining subsystem 210 is configured to authenticate the one or more end users and to provide secure access to the one or more documents.

In an exemplary embodiment, the document pre-processing subsystem 212 that is communicatively connected to the one or more hardware processors 204. The document pre-processing subsystem 212 is configured to pre-process the one or more documents to generate the pre-processed data associated with one or more contents. The document pre-processing subsystem 212 is configured to extract one or more contents from the one or more documents, using a document scraper model. The one or more contents comprise at least one of: one or more words, one or more phrases, one or more numbers, and one or more characters with metadata, annotations and tags, links and references, one or more images, and the like. In other words, the document pre-processing subsystem 212 is configured to parse and scrape the data from the one or more documents, using a document scraper model. The document scraper model may scrape at least one of: words, phrases, numbers, and special characters along with relevant metadata. The document scraper model may utilize at least one of: open-source PDF parser or Image OCR libraries in Python, to read text characters and their associated information including at least one of: coordinates, encoding, font, font style and text rotations from the one or more documents.

The document scraper model is configured to store extracted information in a configurable structured format including at least one of: a scraper document database and a file. The scraper document database or the file may be updated dynamically later. In an embodiment, the scraped information may be stored in a relational database or a NoSQL database that is hosted in a local server or hosted in a cloud server. The scraped information may also be stored in a flat file format, such as CSV or JSON. In an embodiment, there are diverse types of data that may be found in the file.

For example, the data may be textual data that are the most common type of data found in the data files. The text may be in any language and formatted with different fonts, sizes, colors, and styles. The data may be image data that include one or more images of various formats including at least one of: Joint Photographic Experts Group (JPG), Portable Network Graphic (PNG), Graphics Interchange Format (GIF), and Tag Image File Format (TIFF). The images may be embedded in the one or more documents or referenced from an external source. The data may include one or more annotations including at least one of: comments, highlights, and bookmarks. The one or more annotations may be added by an author or by the one or more end users who have access to the one or more documents.

The data may include one or more links to other documents, web pages, and media files. The one or more links may be embedded in the one or more documents or referenced from the external source. In an embodiment, the metadata may be different for each file type and may include font information, character encoding, character styles, word spacing, line spacing, paragraph spacing, paragraph styles, text positioning, text flow, language, annotations, tags, hyperlinks, bookmarks, comments, and the like. The font information may include name of the font used, size of the font, and other font-related properties. The character encoding may include information about a character set used in the one or more documents including Unicode or American Standard Code for Information Interchange (ASCII).

The character styles may include information about formatting of characters (e.g., bold or italic). The word spacing may refer to an amount of space between words in a line of text. The line spacing may refer to the amount of space between the lines of text. The paragraph spacing may refer to the amount of space between paragraphs. The paragraph styles may include information about the formatting of paragraphs including alignment, line spacing, and indentation. The text positioning may include information about a location of the text on the page including coordinates of a text box. The text flow may include information about a direction of a text flow including at least one of: left-to-right text flow and right-to-left text flow. The language may include information about a language of the text. The annotations are notes or comments added to the text by the author or other reviewers. The tags are metadata tags that may be used to provide semantic information about the text including identifying headings or footnotes. The hyperlinks are links to other documents or websites that are embedded in the text. The bookmarks are links to specific locations within the document that may be used for navigation. The comments are notes or annotations that may be added to the text by the author or other reviewers.

In the context of image type files, the metadata may further include at least one of: image dimensions, image format, color profile, resolution, compression, and the like. The image dimensions may include information about size of the image including height and width in pixels, of the image. The image format may include information about a file format including JPEG, PNG, and TIF. The color profile may include information about a color space used in the image including red green blue (RGB) or Adobe RGB. The resolution may include information about resolution of the image including a number of pixels per inch or centimeter. The compression may include information about compression used in the image file including lossless or lossy compression. In an embodiment, for different file types, the parsing is done and relevant textual data, image data, and metadata, are extracted.

The document pre-processing subsystem 212 is further configured to obtain the scraped information from the document scraper model. The document pre-processing subsystem 212 may include a content processing model that may include a rule engine. The rule engine is configured to receive and store one or more custom rules pertaining to the one or more documents. The document pre-processing subsystem 212 is further configured to group the data based on at least one of: parts of speech of at least one of: the one or more words and the one or more phrases, relationship between at least one of: the one or more words and the one or more phrases, and meaning of at least one of: the one or more words and the one or more phrases, using the one or more custom rules. Using the one or more custom rules based on character distances and their properties, these text characters are grouped together into words and phrases. For example, "Invoice Number" may be considered as a single phrase including two words. However, "Vendor Item description" may be broken down to a word and a phrase, "Vendor" and "Item description". Each phrase of the one or more phrases is assigned an x and y coordinate based on the coordinate of words extracted from the one or more documents. The coordinates of words contained in the one or more phrases are aggregated to determine the coordinate of each phrase of the one or more phrases in reference to the complete page in the one or more documents.

The document pre-processing subsystem 212 is further configured to obtain the data from the content processing model. The document pre-processing subsystem 212 further includes a noise removal model with the rule engine. The document pre-processing subsystem 212 with the noise removal model is further configured to at least one of: (a) replace each character in the one or more contents with one or more corresponding Unicode string values, based on one or more custom noise removal rules, (b) remove one or more punctuations before the one or more phrases in the one or more contents, based on the one or more custom noise removal rules, and (c) remove one or more recurred characters, from the one or more contents, based on the one or more custom noise removal rules.

In an exemplary embodiment, the field identifying subsystem 214 is communicatively connected to the one or more hardware processors 204. The field identifying subsystem 214 is configured to identify the one or more data fields in the one or more documents based on one or more custom prompts, using the ML model. The field identifying subsystem 214 utilizes advanced machine learning techniques to enable the accurate and efficient identification of business fields within documents, regardless of their structure or format.

In an exemplary embodiment, the field identifying subsystem 214 is trained to classify the one or more phrases or text data extracted during the pre-processing stage into the one or more data fields such as "reference_field," "total_amount," "discount_amount," "payment_amount," and "effective_date." The field identifying subsystem 214 relies on the historical data and training datasets, which provide variations of field names (e.g., "Policy Number," "Policy #," and "Insurance No." for "reference_field") to enhance its ability to recognize similar but lexically diverse field data of the one or more data fields.

In an exemplary embodiment, the field extracting subsystem 216 is communicatively connected to the one or more hardware processors 204. The field extracting subsystem 216 is configured to the identified one or more data fields corresponding to one or more financial information from the one or more documents, using the ML model. The field extracting subsystem 216 works in tandem with the field identifying subsystem 214 and is responsible for isolating and retrieving the exact content of the identified one or more data fields from the one or more documents. The field extracting subsystem 216 is configured to handle the variability and unstructured nature of the one or more documents, such as remittance documents, invoices, payment vouchers, and bank statements. Upon receiving the one or more data fields from the field identifying subsystem 214, the field extracting subsystem 216 precisely extracts the financial information associated with each data field of the one or more data fields, such as, but not limited to, at least one of: the reference_field, the total_amount, the discount_amount, the payment_amount, the effective_date, and the like.

The extraction process relies on the metadata and spatial information derived during the pre-processing stage by the document scraper model. This includes coordinates, font styles, character encoding, and text flow direction. By leveraging this metadata, the field extracting subsystem 216 ensures accurate extraction of content, even from complex layouts or multi-column document structures. The field extracting subsystem 216 employs the ML model to handle overlapping, nested, or closely positioned fields within the one or more documents. For instance, if the one or more documents contains fields such as "Gross Amount" and "Net Amount" in adjacent positions, the field extracting subsystem 216 accurately isolates the values for each field without misattributing content. Additionally, the field extracting subsystem 216 resolves ambiguities by considering contextual information and semantic rules to ensure that only relevant data is extracted for each data field of the one or more data fields.

The extracted data fields are stored in a structured format, such as JSON or CSV, to facilitate seamless integration with downstream systems. For example, if the extracted one or more data fields corresponds to a policy number, the output is represented as { "reference_field": "Policy Number" }. This structured format allows easy ingestion into financial systems, databases, or the one or more APIs. The field extracting subsystem 216 also incorporates error handling mechanisms to address inconsistencies or missing data in the documents. If any extracted field does not meet predefined validation criteria, the field extracting subsystem 216 flags it for review, enabling the one or more end users to take corrective actions or provide feedback for future improvements.

In an exemplary embodiment, the output subsystem 218 is communicatively connected to the one or more hardware processors 204. The output subsystem 218 is configured to provide the extracted one or more data fields corresponding to the one or more financial information as an output, to the one or more end users on the one or more user interfaces associated with the one or more electronic devices 102 associated with the one or more end users. The output subsystem 218 ensures that the processed and extracted one or more data fields are delivered in a clear, structured, and user-friendly format, enabling seamless interaction and usability for the one or more end users. The output subsystem 218 is responsible for presenting the extracted one or more financial information, such as reference_field, total_amount, discount_amount, payment_amount, and effective_date, to the one or more end users via the one or more user interfaces. The one or more user interfaces may be accessible on the one or more electronic devices 102, including desktop computers, laptops, tablets, and mobile devices.

In an exemplary embodiment, the output subsystem 218 supports multiple output formats to cater to diverse user needs and system requirements. The extracted one or more data fields may be displayed in tabular form, charts, or visual summaries within the one or more user interfaces, or exported in formats such as at least one of: JSON, CSV, and XML for integration with external systems. For example, the extracted one or more data fields may be provided in a structured format like:

```
{
  "reference_field": "Policy Number",
  "total_amount": "Trans Amt",
  "discount_amount": "Com Amt",
  "payment_amount": "Payment",
  "effective_date": "Effective Date"
}
```

This allows the one or more end users or downstream systems to directly utilize the one or more financial information for financial reconciliation, reporting, or further analysis. The output subsystem 218 also facilitates customization options, enabling the one or more end users to configure how they wish to receive and view the extracted data. For instance, the one or more end users may choose to download the output as a file, view it directly within the one or more user interfaces, or have it transfer to an external application or system through the one or more APIs.

In an exemplary embodiment, the plurality of subsystems 110 includes the training subsystem 220 that is communicatively connected to the one or more hardware processors 204. The training subsystem 220 is configured to train the ML model. The training subsystem 220 is configured to obtain the historical data comprising one or more historical documents for training, from the one or more data sources 108. This historical data includes the one or more documents such as invoices, remittance documents, payment vouchers, and other financial documents, which serve as a reference to prepare the ML model for extracting data fields from the one or more documents.

The training subsystem 220 is configured to process the historical data and convert it into the one or more phrases with one or more spatial coordinates of words, referenced to each historical document of the one or more historical documents. The historical data conversion includes parsing the historical documents to identify meaningful one or more phrases, where each phrase of the one or more phrases represents a potential field or element of interest in the one or more documents. Each phrase of the one or more phrases is then assigned one or more spatial coordinates based on the layout and structure of the one or more document. These one or more spatial coordinates may represent the position of the phrase within the one or more documents in relation to the overall page layout, ensuring that the spatial context of the data is preserved.

The training subsystem 220 is configured to label each phrase of the one or more phrases as the one or more data fields by performing: vectorizing, matching, and labelling. The training subsystem 220, via the one or more hardware processors 204, vectorizes at least one of: each phrase of the one or more phrases and one or more variations of the one or more data fields. The variations of the one or more data fields refer to different terminologies or nomenclatures used for the same field across various documents (e.g., "Policy Number," "Policy #," and "Insurance No." for the "reference_field").

The training subsystem 220 uses the one or more hardware processors 204 to perform cosine similarity matching between the one or more phrases in the one or more historical documents and each variation of the one or more variations of the one or more data fields. This matching step calculates the similarity level between each phrase and the known variations of a target data field, enabling the identification of the most probable label for each phrase.

Based on the similarity level computed in the matching step, the training subsystem 220 labels each phrase of the one or more phrases as the one or more data fields. For example, if a phrase has the highest similarity with a variation of "total_amount," it is labelled as such. This process ensures that phrases are accurately associated with the correct data field based on their context and lexical similarity.

Further, the training subsystem 220 is configured to provide one or more features to each phrase of the one or more phrases based on the one or more spatial coordinates of words. The one or more features comprise, but not limited to, at least one of: one or more distance based features, one or more direction based features, one or more dimension based features, one or more positional features, and one or more value based features. The one or more distance based features are configured to measure a distance (d), which may comprises one of: euclidean distance, manhattan distance, minkowski distance, cosine similarity, jaccard index, hamming distance, mahalanobis distance, and any other known techniques. The Euclidean distance is measured between the center of a bounding box of the one or more phrases and another point of reference, which may be any defined location within the one or more documents. This point of reference can include, but is not limited to, the origin (e.g., the top-left corner), any other corner (e.g., top-right, bottom-left, or bottom-right), or the center of the document. The flexibility in choosing the reference point allows the system to adapt to various document layouts and structures, ensuring accurate distance-based feature calculations regardless of the document's format or orientation. The one or more distance based features helps determine how far the one or more phrases are from the starting point of the document layout. The one or more distance based features includes a horizontal distance, which measures the distance from the left edge of the document to the starting point of the bounding box of the phrase. The horizontal distance helps capture the phrase's alignment in terms of left-right positioning. The one or more distance based features includes a vertical distance that captures the distance from the top edge of the document to the top boundary of the bounding box of the phrase, offering information about its vertical placement. Further, the one or more distance based features includes a proximity to neighboring phrases, which includes the distance to the nearest phrase containing alphanumeric or numeric values, providing context for how closely related the given phrase is to adjacent data points. The one or more distance based features are critical for identifying data fields positioned near key values such as totals or references. If Euclidean distance is used, this is calculated as:

$$d = \sqrt{(X_2 - X_1)^2 + (Y_2 - Y_1)^2}$$

The one or more direction based features that compute a slope between the center (0,0) of the bounding box of the phrase and the selected point of reference, such as the top-left corner of the document. The slope provides a directional metric, which assists distinguish fields located in different quadrants of the document. The slope is calculated from the phrase being analyzed to the closest neighboring phrase containing alphanumeric data. The one or more direction based features facilitate understand the relative orientation of the phrase in the document's layout. Similarly, the slope is determined with respect to the closest numeric data phrase. This is particularly useful for phrases like "Total Amount," which are often positioned near numeric values. The one or more direction based features provide valuable insights into the spatial and relational structure of the document, enabling the system to better interpret context based on orientation.

The one or more dimension based features that capture a height and width of the bounding box enclosing the phrase, offering information about the physical size of the phrase on the one or more documents. The one or more positional features that indicate the position of the one or more phrases within the one or more documents, such as the number of rows above or below the phrase of the one or more phrases. The one or more value based features that analyze the one or more contents of the one or more phrases, such as the count of one or more numeric values, one or more alphabetic characters, one or more spaces, and one or more special characters.

The training subsystem 220 utilizes the one or more features to enrich the dataset and enable the ML model to learn complex patterns and relationships between the one or more phrases and their corresponding data fields of the one or more data fields. The training subsystem 220 is further configured to train the ML model to classify the one or more phrases based on the one or more features and one or more target classes. The one or more target classes represent the predefined data fields such as reference_field, total_amount, discount_amount, payment_amount, and effective_date, as well as a "None" class for the one or more phrases that do not correspond to any relevant field. During the training process, the ML model learns to associate the extracted features with the target classes, enabling it to classify the one or more phrases in unseen one or more documents accurately.

In an exemplary embodiment, the training subsystem 220 is further configured to train the ML model using one or more hyperparameters. The one or more hyperparameters are adjustable parameters that influence the performance, accuracy, and efficiency of the ML model. The one or more hyperparameters play a critical role in optimizing behaviour of the ML model, particularly in the context of decision tree-based learning frameworks, such as the Random Forest model. The one or more hyperparameters comprise at least one of: an n-estimators, criterion, a minimum impurity decrease, optimum samples, optimum features, an optimum depth, a minimum samples split, and a minimum samples leaf.

The n-estimators indicate a number of trees in a forest model, criterion indicating a function to assess quality of a split. The minimum impurity decrease indicates an occurrence of the split when impurity decrease is at least one of: greater than a pre-determined value, and equal to the pre-determined value. The optimum samples indicate a number of samples identified for splitting a node. The optimum features indicate optimum number of features identified for splitting the node. The optimum depth indicates optimum number of levels in each decision tree. The minimum samples split indica minimum number of data points placed in the node prior to split of the node. The minimum samples leaf indicates minimum number of the data points allowed in a leaf node. In an embodiment, the one or more hyperparameters are automatically adjusted to determine one or more optimized hyperparameters in a subset value of each of the one or more hyperparameters. In an embodiment, cross validation is used to determine the best possible ML model without overfitting on test data.

In an exemplary embodiment, the plurality of subsystems 110 includes the accuracy assessment subsystem 222 that is communicatively connected to the one or more hardware processors 204. The accuracy assessment subsystem 222 is configured to assess an accuracy of extracted one or more financial information by comparing the extracted one or more financial information with one or more reference financial information. The accuracy assessment subsystem 222 is configured to utilize one or more techniques including at least one of: exact matching, fuzzy matching, and similarity metrics, to evaluate correctness and consistency of the extracted data (i.e., the extracted one or more financial information). The accuracy assessment subsystem 222 is configured to quantify accuracy using appropriate evaluation metrics including at least one of: precision, recall, or any other suitable measure, to provide a comprehensive assessment of the data extraction process.

The accuracy assessment subsystem 222 is further configured to generate one or more evaluation reports providing one or more insights into the accuracy of the extracted one or more financial information. The one or more evaluation reports may highlight at least one of: error patterns, error distribution across different document types or data elements, and identify specific types and sources of errors. The one or more evaluation reports may include at least one of: visualizations, statistical summaries, and detailed error analysis, to facilitate a comprehensive understanding of the accuracy assessment results.

The accuracy assessment subsystem 222 is further configured to generate one or more feedback based on the one or more evaluation reports to guide improvements in the data extraction process. The accuracy assessment subsystem 222 is configured to identify specific patterns or rules contributing to errors and provides actionable recommendations for refinement. In an embodiment, the one or more feedback may include at least one of: one or more suggestions for adjusting one or more parameters of the ML model, data preprocessing techniques, feature selection, or other aspects of the data extraction pipeline.

The accuracy assessment subsystem 222 is further configured to automatically generate one or more feedback in at least one of: real-time and periodic, on the one or more evaluation reports to provide one or more suggestions on the extraction process. The accuracy assessment subsystem 222 is configured to integrate with the data extraction pipeline, automatic assessment of the accuracy, generation of the one or more evaluation reports, and provision of the one or more feedback, without manual intervention. The accuracy assessment subsystem 222 is configured to support automation through at least one of: use of APIs, event triggers, and workflow integration, ensuring timely and automated feedback incorporation into the data extraction process.

The accuracy assessment subsystem 222 is further configured to monitor performance of the extraction process over time to determine one or more changes in accuracy metrics and error patterns. The accuracy assessment subsystem 222 is configured to enable comparisons between different iterations or versions of the ML model or data extraction pipeline, to evaluate the impact of feedback and improvement efforts.

In an exemplary embodiment, the plurality of subsystems 110 includes the system implementation subsystem 224 that is communicatively connected to the one or more hardware processors 204. The system implementation subsystem 224 is configured to deploy and integrate the ML-based system 104 for extracting the one or more data fields from the one or more documents in a real-world operational environment. The system implementation subsystem 224 ensures that the entire ML-based system 104, including its various components, operates efficiently, reliably, and securely when integrated into production workflows. The system implementation subsystem 224 is responsible for configuring the ML-based system 104 on appropriate infrastructure, which may include cloud environments, on-premises servers, or hybrid setups. The subsystem supports deployment on various cloud platforms, such as Amazon® Web Services (AWS), Microsoft® Azure, or Google® Cloud Platform (GCP). The system implementation subsystem 224 ensures compatibility with the selected infrastructure by leveraging containerization technologies, such as Docker or Kubernetes, to facilitate seamless deployment and scaling of the ML-based system 104.

The system implementation subsystem 224 is further configured to handle integration with third-party applications and enterprise systems via the one or more APIs. This includes connecting the ML-based system 104 with financial management systems, customer relationship management (CRM) platforms, or document repositories to allow real-time ingestion and processing of the one or more documents. The system implementation subsystem 224 also supports bidirectional data flow, enabling the seamless exchange of processed and extracted the one or more data fields between the enterprise systems and the ML-based system 104. The ML-based system 104 may be deployed using any standard machine learning framework that supports scalability, optimization, and integration. Examples of deployment frameworks include at least one of: TensorFlow, PyTorch, Scikit-learn, and the like. The machine learning framework ensures compatibility with various environments, providing tools for optimizing runtime performance, managing resources, and integrating with APIs for real-time or batch data processing.

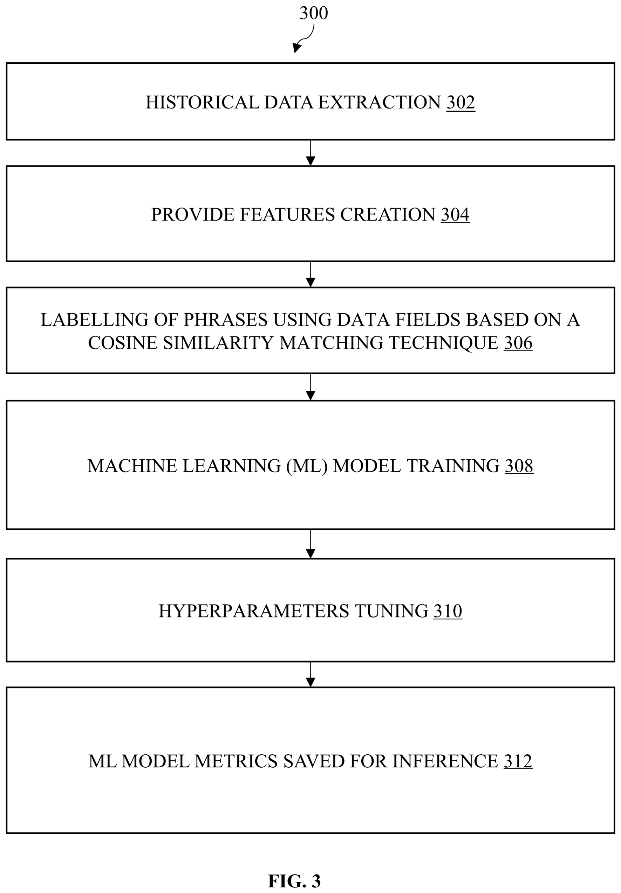

**FIG.** 3 is a process flow 300 depicting training of the ML-based system 104 for automatically extracting the one or more data fields from the one or more documents, in accordance with another embodiment of the present disclosure.

In an exemplary embodiment, at step 302, the process flow 300 includes the historical data obtained from the one or more data sources that comprising one or more historical documents for training. At step 304, the process flow 300 includes the historical data is converted into the one or more phrases with the one or more spatial coordinates of words in reference to each historical document of the one or more historical documents. At step 306, the process flow 300 includes each phrase of the one or more phrases is labelled as the one or more data fields. The one or more phrases are labelled by performing at least of: vectorizing, matching, and labelling. The training subsystem vectorizes at least one of: each phrase of the one or more phrases and one or more variations of the one or more data fields. The training subsystem is configured to perform cosine similarity matching technique between the one or more phrases in the one or more historical documents and each variation of the one or more variations of the one or more data fields. Further, the training subsystem labels each phrase of the one or more phrases as the one or more data fields based on a similarity level between each phrase of the one or more phrases with the one or more variations of the one or more data fields.

At step 308, the process flow 300 includes train the ML model to classify the one or more phrases, based on the one or more features and one or more target classes. The training subsystem is configured to provide one or more features to each phrase of the one or more phrases based on the one or more spatial coordinates of words, wherein the one or more features comprise at least one of: the one or more distance based features, the one or more direction based features, the one or more dimension based features, the one or more positional features, and the one or more value based features.

At step 310, the process flow 300 includes train the ML model using the one or more hyperparameters. The one or more hyperparameters comprising at least one of: a) the n estimators indicating a number of trees in a forest model, b) the criterion indicating a function to assess quality of a split, c) the minimum impurity decrease indicating an occurrence of the split when impurity decrease is at least one of: greater than the pre-determined value, and equal to the pre-determined value, d) the optimum samples indicating the number of samples identified for splitting the node, e) the optimum features optimum indicating optimum number of features identified for splitting the node, f) the optimum depth indicating optimum number of levels in each decision tree, g) the minimum samples split indicating minimum number of data points placed in the node prior to split of the node, and ) the minimum samples leaf indicating minimum number of the data points allowed in a leaf node. Further, the one or more hyperparameters are automatically adjusted to determine one or more optimized hyperparameters in a subset value of each of one or more hyperparameters.

At step 312, the process flow 300 includes the ML-model is deployed to the cloud production environment for real-world use upon trained and validated. The deployment stage ensures that the ML-based system is accessible, scalable, and seamlessly integrated with other systems and workflows to handle the automated extraction of the one or more data fields from one or more documents. The cloud production environment serves as the operational platform for the ML-based system 104, offering the necessary computational resources and scalability. The choice of cloud production environment depends on the specific requirements of the deployment, such as processing speed, storage capacity, cost-efficiency, and integration with existing enterprise infrastructure. The ML model may be deployed using any standard machine learning framework that supports scalability, optimization, and integration. The deployment frameworks include at least one of: the TensorFlow, the PyTorch, and the Scikit-learn. The TensorFlow provides a comprehensive ecosystem for deploying the ML-model to the cloud with built-in support for the one or more APIs and distributed computing. The PyTorch provides flexibility for deploying the ML-model, especially in dynamic and experimental settings, while supporting large-scale distribution systems. The Scikit-learn suitable for lighter workloads and straightforward implementations, particularly when the ML-model complexity and document volume are moderate. The ML-model is integrated into enterprise workflows through the one or more APIs, enabling seamless communication with third-party applications, such as financial management tools, document repositories, and analytics platforms. This integration ensures the extracted data fields are immediately accessible to downstream systems for reconciliation, reporting, or decision-making.

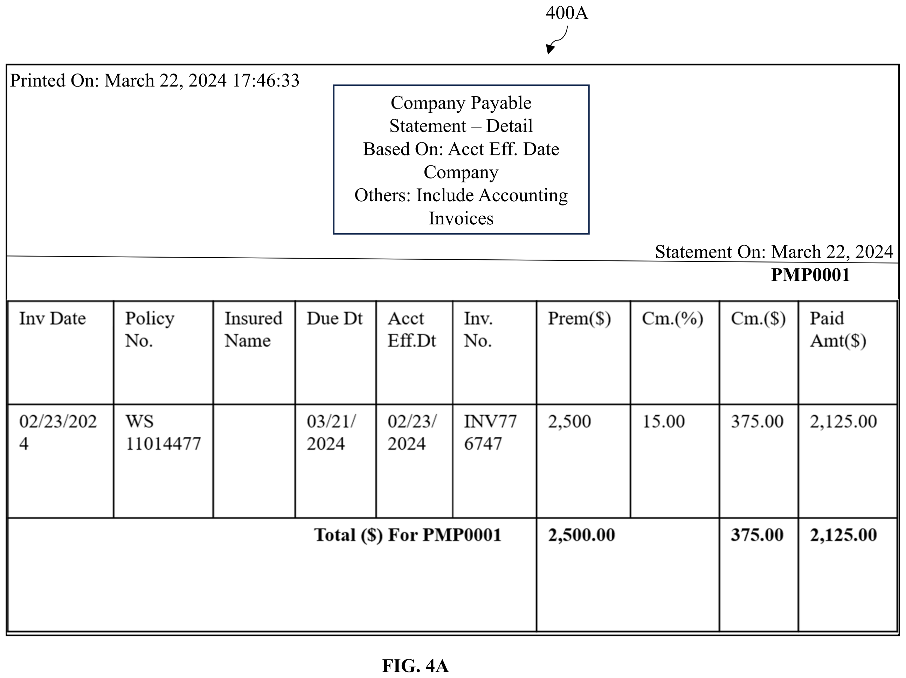

**FIGs. 4A- 4B** are exemplary input documents for automatically extracting the one or more data fields, in accordance with another embodiment of the present disclosure.

In an exemplary embodiment, FIG. 4A illustrates a first example of first input document 400A. The first input document 400A contains a scanned remittance document or invoice with various financial data fields. The one or more data fields include: Policy Number (referred to as "Policy No."), Total Amount (referred to as "Prem ($)"), Discount Amount (referred to as "Cm.($)"), Payment Amount (referred to as "Paid Amt ($)"), and Effective Date (referred to as "Acct Eff. Dt").

The first input document 400A has the following characteristics: a) the one or more data fields are arranged in an unstructured layout with no predefined format, b) the one or more data field names (e.g., "Policy No.") may differ from standard terminology (e.g., "Reference Field"), and c) the one or more numeric values and text are embedded within a mix of columns and rows. The first input document 400A is pre-processed to identify key fields such as "Policy No." as the reference_field, "Prem ($)" as total_amount, and so on. The identification is achieved by matching the extracted phrases with variations of business field names using cosine similarity and contextual analysis. The ML-based system 104 isolates the exact values associated with each identified field, such as "12345" for the Policy No. or "$1000" for the Total Amount. The extracted fields are structured into a JSON format for easy integration.

Final output:

```
{
  "reference_field": "Policy No.",
  "total_amount": "Prem ($)",
  "discount_amount": "Cm.($)",
  "payment_amount": "Paid Amt ($)",
  "effective _date": "Acct Eff. Dt"
}
```

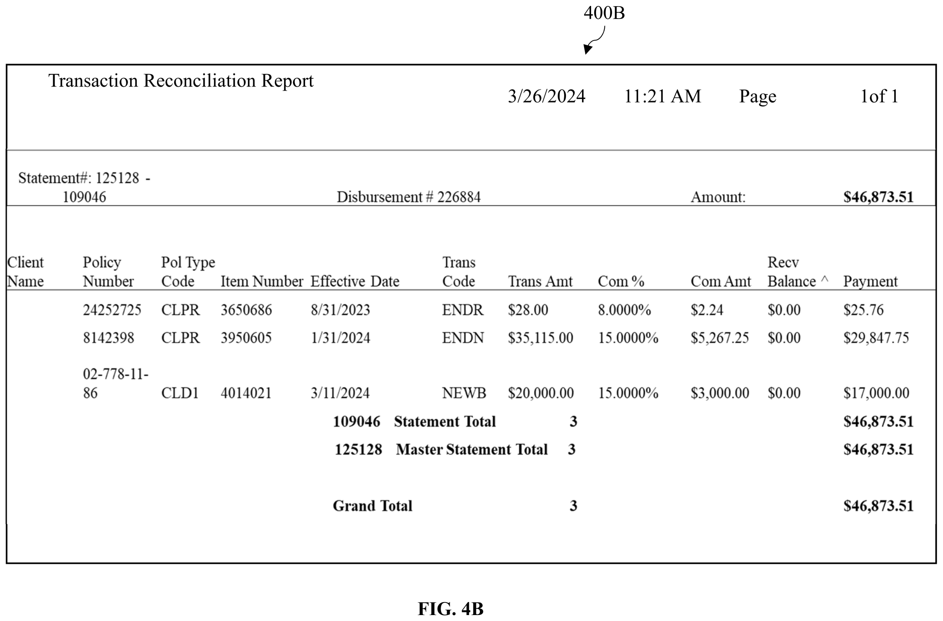

In an exemplary embodiment, FIG. 4B illustrates a second example of second input document 400B. The second input document 400B is a financial document with variations in field terminology and layout. The second input document 400B is configured with one or more characteristics: a) the one or more data fields are presented in a semi-structured tabular format, b) the text and the one or more numeric values are distributed across rows and columns, requiring accurate alignment for extraction.

The second input document 400B is parsed using OCR, and phrases such as "Policy Number" and "Trans Amt" are identified. Metadata such as font size, alignment, and coordinates are also extracted. Using the ML model, the ML-based system 104 matches "Policy Number" with the reference_field, "Trans Amt" with the total_amount, and so on. Contextual rules and spatial relationships aid in identifying fields even when their terminology differs from standard labels. The extracted phrases are associated with their corresponding data values. The structured output is generated in a key-value JSON format:

```
{
  "reference_field": "Policy Number",
  "total_amount": "Trans Amt",
  "discount_amount": "Com Amt",
  "payment_amount": "Payment",
  "effective _date": "Effective Date"
}
```

The examples demonstrate that the ML-based system 104 is able to handle diverse terminologies and synonyms for key fields (e.g., "Policy No." vs. "Policy Number"). The ML-based system 104 is capable of processing both unstructured and semi-structured document layouts by leveraging spatial and semantic features. Despite variations in terminology, the ML-based system 104 accurately maps extracted one or more data fields to their corresponding data labels through advanced classification and similarity matching techniques. The structured JSON output format is consistent across examples, ensuring compatibility with various downstream systems such as financial reconciliation tools or data analytics platforms.

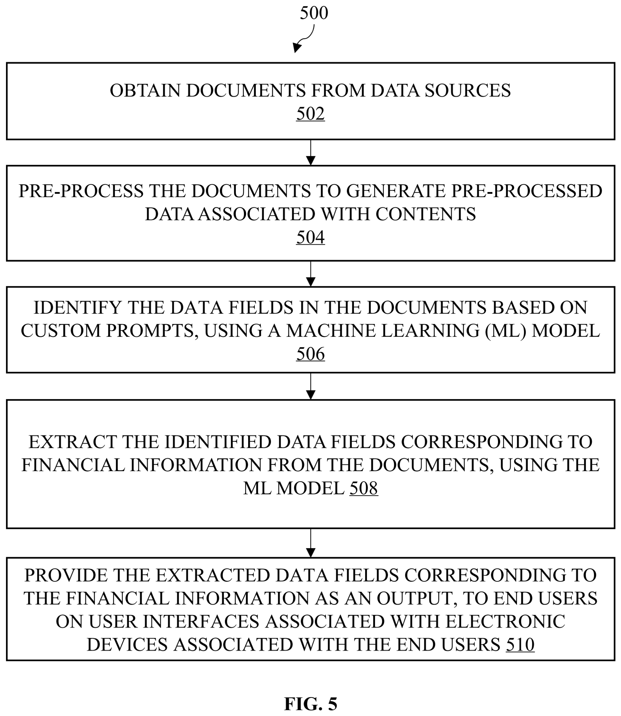

**FIG.** 5 is a flow chart illustrating an ML-based method 500 for automatically extracting the one or more data fields from the one or more documents, in accordance with an embodiment of the present disclosure.

At step 502, the one or more documents are obtained from the one or more data sources 108. At step 504, the one or more documents are pre-processed to generate the pre-processed data associated with the one or more contents. The ML-based method 500 include extracting data from the one or more documents, using the document scraper model. The data comprise at least one of: the one or more words, the one or more phrases, the one or more numbers, and the one or more characters with the metadata. Further, the ML-based method 500 include grouping the data based on at least one of: the parts of speech of at least one of: the one or more words and the one or more phrases, relationship between at least one of: the one or more words and the one or more phrases, and meaning of at least one of: the one or more words and the one or more phrases, using the one or more custom rules. The ML-based method 500 include replacing each character in the one or more contents with the one or more corresponding Unicode string values, based on the one or more custom noise removal rules. The ML-based method 500 include removing the one or more punctuations before the one or more phrases in the one or more contents, based on the one or more custom noise removal rules. The ML-based method 500 include removing the one or more recurred characters from the one or more contents, based on the one or more custom noise removal rules.

At step 506, the one or more data fields are identified in the one or more documents based on one or more custom prompts, using the ML model. At step 508, the one or more data fields are extracted corresponding to one or more financial information from the one or more documents, using the ML model. At step 510, the provide the output of the extracted one or more data fields corresponding to the one or more financial information, to the one or more end users on the one or more user interfaces associated with the one or more electronic devices associated with the one or more end users.

Numerous advantages of the present disclosure may be apparent from the discussion above. In accordance with the present disclosure, the ML-based system provides an efficient and automated solution for extracting the one or more data fields from the one or more documents, addressing the limitations of prior technologies. The ML-based system eliminates the need for manual intervention by automating the identification and extraction of the one or more data fields from unstructured and semi-structured documents. This significantly reduces the time and effort required to process large volumes of documents. The ML-based system is configured to handle diverse document formats, layouts, and terminologies. Whether the one or more data fields are arranged in tabular structures, scattered across a page, or presented in varying terminologies, the ML-based system adapts to these variations using advanced ML techniques and contextual analysis.

By leveraging ML-model trained on historical data and enriched with features such as spatial coordinates, direction, and value-based properties, the ML-based system achieves high accuracy in identifying and extracting relevant data fields. This minimizes errors and ensures reliable results. The ML-based system effectively distinguishes between lexically similar fields by using the cosine similarity matching technique and contextual rules. This ensures the accurate extraction of the intended data fields. The ML-based system includes robust preprocessing mechanisms, such as noise removal rules, which filter out irrelevant characters, annotations, and recurring patterns. This enhances the quality of the extracted data and improves downstream processing. The ML-based system generates structured outputs, such as JSON or CSV, making it easy to integrate the extracted data with downstream systems like financial reconciliation tools, reporting platforms, and analytics software. This ensures seamless workflows and better utilization of the extracted information. The ML-based system supports documents in multiple languages (e.g., English, Spanish, French) and file formats (e.g., PDF, images, and text). This expands its applicability across industries and regions. The ML-based system incorporates feedback mechanisms and accuracy assessment modules to refine the ML model over time. This ensures that the ML-based system remains reliable and adaptable to evolving document formats and business needs.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer-readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid-state memory, magnetic tape, a removable computer diskette, a random-access memory (RAM), a read-only memory (ROM), a rigid magnetic disk and an optical disk. Current examples of optical disks include compact disk-read only memory (CD-ROM), compact disk-read/write (CD-R/W) and DVD.

Input/output (I/O) devices (including but not limited to keyboards, displays, pointing devices, etc.) can be coupled to the ML-based system 104 either directly or through intervening I/O controllers. Network adapters may also be coupled to the ML-based system 104 to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/ML-based system 104 in accordance with the embodiments herein. The ML-based system 104 herein comprises at least one processor or central processing unit (CPU). The CPUs are interconnected via the system bus 208 to various devices including at least one of: a random-access memory (RAM), read-only memory (ROM), and an input/output (I/O) adapter. The I/O adapter can connect to peripheral devices, including at least one of: disk units and tape drives, or other program storage devices that are readable by the ML-based system 104. The ML-based system 104 can read the inventive instructions on the program storage devices and follow these instructions to execute the methodology of the embodiments herein.

The ML-based system further includes a user interface adapter that connects a keyboard, mouse, speaker, microphone, and/or other user interface devices including a touch screen device (not shown) to the bus to gather user input. Additionally, a communication adapter connects the bus to a data processing network, and a display adapter connects the bus to a display device which may be embodied as an output device including at least one of: a monitor, printer, or transmitter, for example.

A description of an embodiment with several components in communication with each other does not imply that all such components are required. On the contrary, a variety of optional components are described to illustrate the wide variety of possible embodiments of the invention. When a single device or article is described herein, it will be apparent that more than one device/article (whether or not they cooperate) may be used in place of a single device/article. Similarly, where more than one device or article is described herein (whether or not they cooperate), it will be apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/-features. Thus, other embodiments of the invention need not include the device itself.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s)

**EP 4 769 285 A1**

based on the teachings contained herein. Such alternatives fall within the scope and spirit of the disclosed embodiments. Also, the words "comprising," "having," "containing," and "including," and other similar forms are intended to be equivalent in meaning and be open-ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

**Claims**

1. A machine-learning based (ML-based) method for automatically extracting one or more data fields from one or more documents, the ML-based method comprising:

   obtaining, by one or more hardware processors, the one or more documents from one or more data sources;
   pre-processing, by the one or more hardware processors, the one or more documents to generate pre-processed data associated with one or more contents;
   identifying, by the one or more hardware processors, the one or more data fields in the one or more documents based on one or more custom prompts, using a machine learning (ML) model;
   extracting, by the one or more hardware processors, the identified one or more data fields corresponding to one or more financial information from the one or more documents, using the ML model; and
   providing, by the one or more hardware processors, the extracted one or more data fields corresponding to the one or more financial information as an output, to one or more end users on one or more user interfaces associated with one or more electronic devices associated with the one or more end users.

2. The ML-based method of claim 1, further comprising training, by the one or more hardware processors, the ML model by:

   obtaining, by the one or more hardware processors, historical data comprising one or more historical documents for training, from the one or more data sources;
   converting, by the one or more hardware processors, the historical data into one or more phrases with one or more spatial coordinates of words in reference to each historical document of the one or more historical documents;
   labelling, by the one or more hardware processors, each phrase of the one or more phrases as the one or more data fields, by:

      vectorizing, by the one or more hardware processors, at least one of: each phrase of the one or more phrases and one or more variations of the one or more data fields;
      matching, by the one or more hardware processors, the one or more phrases in the one or more historical documents with each variation of the one or more variations of the one or more data fields, using a cosine similarity matching technique; and
      labelling, by the one or more hardware processors, each phrase of the one or more phrases, as the one or more data fields based on a similarity level between each phrase of the one or more phrases with the one or more variations of the one or more data fields;

   providing, by the one or more hardware processors, one or more features to each phrase of the one or more phrases based on the one or more spatial coordinates of words, wherein the one or more features comprise at least one of: one or more distance based features, one or more direction based features, one or more dimension based features, one or more positional features, and one or more value based features; and
   training, by the one or more hardware processors, the ML model to classify the one or more phrases, based on the one or more features and one or more target classes.

3. The ML-based method of claim 1, further comprising training, by the one or more hardware processors, the ML model using one or more hyperparameters,

wherein the one or more hyperparameters comprising at least one of: n estimators indicating a number of trees in a forest model, criterion indicating a function to assess quality of a split, minimum impurity decrease indicating an occurrence of the split when impurity decrease is at least one of: greater than a pre-determined value, and equal to the pre-determined value, optimum samples indicating a number of samples identified for splitting a node, optimum features optimum indicating optimum number of features identified for splitting the node, optimum depth indicating optimum number of levels in each decision tree, minimum samples split indicating minimum number of data points placed in the node prior to split of the node, and minimum samples leaf indicating minimum number of the data points allowed in a leaf node, and

wherein the one or more hyperparameters are automatically adjusted to determine one or more optimized hyperparameters in a subset value of each of one or more hyperparameters.

4. The ML-based method of claim 1, wherein pre-processing the one or more documents comprises extracting, by the one or more hardware processors, data from the one or more documents, using a document scraper model, wherein the data comprise at least one of: one or more words, one or more phrases, one or more numbers, and one or more characters with metadata.

5. The ML-based method of claim 4, wherein pre-processing the one or more documents comprises grouping, by the one or more hardware processors, the data based on at least one of: parts of speech of at least one of: the one or more words and the one or more phrases, relationship between at least one of: the one or more words and the one or more phrases, and meaning of at least one of: the one or more words and the one or more phrases, using one or more custom rules.

6. The ML-based method of claim 5, wherein pre-processing the data associated with the one or more documents further comprises at least one of:

   replacing, by the one or more hardware processors, each character in the one or more contents with one or more corresponding Unicode string values, based on one or more custom noise removal rules;
   removing, by the one or more hardware processors, one or more punctuations before the one or more phrases in the one or more contents, based on the one or more custom noise removal rules; and
   removing, by the one or more hardware processors, one or more recurred characters, from the one or more contents, based on the one or more custom noise removal rules.

7. The ML-based method of claim 1, further comprising:

   assessing, by the one or more hardware processors, an accuracy of extracted one or more financial information by comparing the extracted one or more data fields corresponding to the one or more financial information with one or more reference fields corresponding to one or more reference financial information;
   generating, by the one or more hardware processors, one or more evaluation reports providing one or more insights into the accuracy of the extracted one or more data fields corresponding to the one or more financial information;
   automatically generating, by the one or more hardware processors, one or more feedback in at least one of: real-time and periodic, on the one or more evaluation reports to provide one or more suggestions on the extraction process; and
   monitoring, by the one or more hardware processors, performance of the extraction process over time to determine one or more changes in accuracy metrics and error patterns.

8. A machine learning based (ML-based) system for automatically extracting one or more data fields from one or more documents, the ML-based system comprising:

   one or more hardware processors;
   a memory coupled to the one or more hardware processors, wherein the memory comprises a plurality of subsystems in form of programmable instructions executable by the one or more hardware processors, and wherein the plurality of subsystems comprises:

      a document obtaining subsystem configured to obtain the one or more documents from one or more data sources;
      a document pre-processing subsystem configured to pre-process the one or more documents to generate pre-processed data associated with one or more contents;

a field identifying subsystem configured to identify the one or more data fields in the one or more documents based on one or more custom prompts, using a machine learning (ML) model;

a field extracting subsystem configured to the identified one or more data fields corresponding to one or more financial information from the one or more documents, using the ML model; and

an output subsystem configured to provide the extracted one or more data fields corresponding to the one or more financial information as an output, to one or more end users on one or more user interfaces associated with one or more electronic devices associated with the one or more end users.

9.  The ML-based system of claim 8, further comprising a training subsystem configured to train the ML model, wherein in training the ML model, the training subsystem is configured to:

obtain historical data comprising one or more historical documents for training, from the one or more data sources;

convert the historical data into one or more phrases with one or more spatial coordinates of words in reference to each historical document of the one or more historical documents;

label each phrase of the one or more phrases as the one or more data fields, by:

vectorizing, by the one or more hardware processors, at least one of: each phrase of the one or more phrases and one or more variations of the one or more data fields;

matching, by the one or more hardware processors, the one or more phrases in the one or more historical documents with each variation of the one or more variations of the one or more data fields, using a cosine similarity matching technique; and

labelling, by the one or more hardware processors, each phrase of the one or more phrases, as the one or more data fields based on a similarity level between each phrase of the one or more phrases with the one or more variations of the one or more data fields;

provide one or more features to each phrase of the one or more phrases based on the one or more spatial coordinates of words, wherein the one or more features comprise at least one of: one or more distance based features, one or more direction based features, one or more dimension based features, one or more positional features, and one or more value based features; and

train the ML model to classify the one or more phrases, based on the one or more features and one or more target classes.

10. The ML-based system of claim 8, wherein the training subsystem is further configured to train the ML model using one or more hyperparameters,

wherein the one or more hyperparameters comprising at least one of: n estimators indicating a number of trees in a forest model, criterion indicating a function to assess quality of a split, minimum impurity decrease indicating an occurrence of the split when impurity decrease is at least one of: greater than a pre-determined value, and equal to the pre-determined value, optimum samples indicating a number of samples identified for splitting a node, optimum features optimum indicating optimum number of features identified for splitting the node, optimum depth indicating optimum number of levels in each decision tree, minimum samples split indicating minimum number of data points placed in the node prior to split of the node, and minimum samples leaf indicating minimum number of the data points allowed in a leaf node, and

wherein the one or more hyperparameters are automatically adjusted to determine one or more optimized hyperparameters in a subset value of each of one or more hyperparameters.

11. The ML-based system of claim 8, wherein in pre-processing the one or more documents, the document pre-processing subsystem is configured to extract data from the one or more documents, using a document scraper model, wherein the data comprise at least one of: one or more words, one or more phrases, one or more numbers, and one or more characters with metadata.

12. The ML-based system of claim 11, wherein in pre-processing the one or more documents, the document pre-processing subsystem is further configured to group the data based on at least one of: parts of speech of at least one of: the one or more words and the one or more phrases, relationship between at least one of: the one or more words and the one or more phrases, and meaning of at least one of: the one or more words and the one or more phrases, using one or more custom rules.

13. The ML-based system of claim 12, wherein in pre-processing the data associated with the one or more electronic documents, the document pre-processing subsystem is further configured to at least one of:

replace each character in the one or more contents with one or more corresponding Unicode string values, based on one or more custom noise removal rules;
remove one or more punctuations before the one or more phrases in the one or more contents, based on the one or more custom noise removal rules; and
remove one or more recurred characters, from the one or more contents, based on the one or more custom noise removal rules.

14. The ML-based system of claim 8, further comprising an accuracy assessment subsystem configured to:

assess an accuracy of extracted one or more financial information by comparing the extracted one or more data fields corresponding to the one or more financial information with one or more reference fields corresponding to one or more reference financial information;
generate one or more evaluation reports providing one or more insights into the accuracy of the extracted one or more data fields corresponding to the one or more financial information;
automatically generate one or more feedback in at least one of: real-time and periodic, on the one or more evaluation reports to provide one or more suggestions on the extraction process; and
monitor performance of the extraction process over time to determine one or more changes in accuracy metrics and error patterns.

100

One or More
Electronic
Devices 102

Network
106

One or More
Data Sources 108

ML-Based System 104

Plurality of
Subsystems
110

**FIG. 1**

104

## Memory unit 202

### Plurality of subsystems 110

Document obtaining subsystem 210

Document pre-processing subsystem 212

Field identifying subsystem 214

Field extracting subsystem 216

Output subsystem 218

Training subsystem 220

Accuracy assessment subsystem 222

System implementation subsystem 224

System bus 208

Storage unit 206

Hardware processor(s) 204

**FIG. 2**

300

HISTORICAL DATA EXTRACTION 302

PROVIDE FEATURES CREATION 304

LABELLING OF PHRASES USING DATA FIELDS BASED ON A COSINE SIMILARITY MATCHING TECHNIQUE 306

MACHINE LEARNING (ML) MODEL TRAINING 308

HYPERPARAMETERS TUNING 310

ML MODEL METRICS SAVED FOR INFERENCE 312

**FIG. 3**

Printed On: March 22, 2024 17:46:33

**Company Payable Statement – Detail**
Based On: Acct Eff. Date
Company
Others: Include Accounting Invoices

Statement On: March 22, 2024

**PMP0001**

| Inv Date | Policy No. | Insured Name | Due Dt | Acct Eff.Dt | Inv. No. | Prem($) | Cm.(%) | Cm.($) | Paid Amt($) |
|---|---|---|---|---|---|---|---|---|---|
| 02/23/2024 | WS 11014477 | | 03/21/2024 | 02/23/2024 | INV776747 | 2,500 | 15.00 | 375.00 | 2,125.00 |
| | | | | Total ($) For PMP0001 | | 2,500.00 | | 375.00 | 2,125.00 |

**FIG. 4A**

EP 4 769 285 A1

400B

| Transaction Reconciliation Report | | | | | | | 3/26/2024 | 11:21 AM | Page | 1of 1 |

| Statement#: 125128 - 109046 | | | | Disbursement # 226884 | | | | | Amount: | $46,873.51 |

| Client Name | Policy Number | Pol Type Code | Item Number | Effective Date | Trans Code | Trans Amt | Com % | Com Amt | Recv Balance ^ | Payment |
|---|---|---|---|---|---|---|---|---|---|---|
| | 24252725 | CLPR | 3650686 | 8/31/2023 | ENDR | $28.00 | 8.0000% | $2.24 | $0.00 | $25.76 |
| | 8142398 | CLPR | 3950605 | 1/31/2024 | ENDN | $35,115.00 | 15.0000% | $5,267.25 | $0.00 | $29,847.75 |
| | 02-778-11-86 | CLD1 | 4014021 | 3/11/2024 | NEWB | $20,000.00 | 15.0000% | $3,000.00 | $0.00 | $17,000.00 |
| | | | **109046** | **Statement Total** | | **3** | | | | $46,873.51 |
| | | | **125128** | **Master Statement Total** | | **3** | | | | $46,873.51 |
| | | | **Grand Total** | | | **3** | | | | $46,873.51 |

**FIG. 4B**

500

OBTAIN DOCUMENTS FROM DATA SOURCES
502

PRE-PROCESS THE DOCUMENTS TO GENERATE PRE-PROCESSED
DATA ASSOCIATED WITH CONTENTS
504

IDENTIFY THE DATA FIELDS IN THE DOCUMENTS BASED ON
CUSTOM PROMPTS, USING A MACHINE LEARNING (ML) MODEL
506

EXTRACT THE IDENTIFIED DATA FIELDS CORRESPONDING TO
FINANCIAL INFORMATION FROM THE DOCUMENTS, USING THE
ML MODEL 508

PROVIDE THE EXTRACTED DATA FIELDS CORRESPONDING TO
THE FINANCIAL INFORMATION AS AN OUTPUT, TO END USERS
ON USER INTERFACES ASSOCIATED WITH ELECTRONIC
DEVICES ASSOCIATED WITH THE END USERS 510

**FIG. 5**

Europäisches
Patentamt

European
Patent Office

Office européen
des brevets

## EUROPEAN SEARCH REPORT

**Application Number**

EP 25 22 7157

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/338577 A1 (GDAK MICHAL [PL] ET AL) 10 October 2024 (2024-10-10) * abstract * * paragraph [0003] * * paragraph [0015] - paragraph [0099] * * figures 1-11 * ----- | 1-14 | INV. G06Q40/12 G06N20/00 |
| A | Anonymous: "Hyperparameter optimization - Wikipedia", , 30 September 2023 (2023-09-30), XP093275300, Retrieved from the Internet: URL:https://en.wikipedia.org/w/index.php?title=Hyperparameter_optimization&oldid=1177947506 * the whole document * ----- | 3,11 | |
| A | Anonymous: "sklearn.ensemble.RandomForestClassifier", scikit-learn.org, 28 December 2017 (2017-12-28), XP055703581, Retrieved from the Internet: URL:https://scikit-learn.org/stable/modules/generated/sklearn.ensemble.RandomForestClassifier.html [retrieved on 2020-06-10] * the whole document * ----- -/-- | 3,11 | **TECHNICAL FIELDS SEARCHED (IPC)** G06Q G06E G06N |

The present search report has been drawn up for all claims

| Place of search | Date of completion of the search | Examiner |
|---|---|---|
| The Hague | 21 May 2026 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 3**

| | Europäisches Patentamt European Patent Office Office européen des brevets | **EUROPEAN SEARCH REPORT** | **Application Number** EP 25 22 7157 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DHARITRI MISRA ET AL: "A System for Automated Extraction of Metadata from Scanned Documents using Layout Recognition and String Pattern Search Models", PROCEEDINGS OF THE 12TH ACM/IEEE-CS JOINT CONFERENCE ON DIGITAL LIBRARIES, 20 December 2010 (2010-12-20), pages 1-17, XP055431482, DOI: 10.1145/2232817.2232823 ISBN: 978-1-4503-1154-0 * page 1 - page 7 * ----- | 1,4,8,11 | |
| A | US 2024/419901 A1 (KUMAR DURGESH [IN] ET AL) 19 December 2024 (2024-12-19) * abstract * * paragraph [0014] - paragraph [0030] * ----- | 5,6,12, 13 | |
| A | PUTRA SYOPIANSYAH JAYA ET AL: "Feature Engineering with Word2vec on Text Classification Using The K-Nearest Neighbor Algorithm", 2022 10TH INTERNATIONAL CONFERENCE ON CYBER AND IT SERVICE MANAGEMENT (CITSM) IEEE, 20 September 2022 (2022-09-20), pages 1-6, XP034223786, DOI: 10.1109/CITSM56380.2022.9935873 [retrieved on 2022-11-11] * the whole document * ----- -/-- | 2,9 | TECHNICAL FIELDS SEARCHED (IPC) |

The present search report has been drawn up for all claims

| Place of search | Date of completion of the search | Examiner |
|---|---|---|
| The Hague | 21 May 2026 | Nicoli, Félix |

Europäisches
Patentamt

European
Patent Office

Office européen
des brevets

# EUROPEAN SEARCH REPORT

**Application Number**

EP 25 22 7157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOGHADASI MAHDI NASER ET AL: "Sent2Vec: A New Sentence Embedding Representation With Sentimental Semantic", 2020 IEEE INTERNATIONAL CONFERENCE ON BIG DATA (BIG DATA) IEEE, 10 December 2020 (2020-12-10), pages 4672-4680, XP033889123, DOI: 10.1109/BIGDATA50022.2020.9378337 [retrieved on 2021-03-12] * the whole document * | 2,9 | |
| A | Yiheng Xu: "LayoutLM: Pre-training of Text and Layout for Document Image Understanding", arXiv.org, 16 June 2020 (2020-06-16), XP093163696, Ithaca DOI: 10.48550/arxiv.1912.13318 Retrieved from the Internet: URL:https://arxiv.org/pdf/1912.13318 * the whole document * | 2,9 | |
| A | RAHMAN MUHAMMAD MAHBUBUR ET AL: "Deep Understanding of a Document's Structure", PROCEEDINGS OF THE FOURTH IEEE/ACM INTERNATIONAL CONFERENCE ON BIG DATA COMPUTING, APPLICATIONS AND TECHNOLOGIES, 5 December 2017 (2017-12-05), pages 63-73, XP093400087, Retrieved from the Internet: URL:https://dl.acm.org/doi/pdf/10.1145/3148055.3148080> * the whole document * | 2,9 | |

**TECHNICAL FIELDS SEARCHED (IPC)**

The present search report has been drawn up for all claims

| Place of search | Date of completion of the search | Examiner |
|---|---|---|
| The Hague | 21 May 2026 | Nicoli, Félix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 7157

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2026

| Patent document cited in search report | Publication date | Patent family member(s) | | Publication date |
|---|---|---|---|---|
| US 2024338577 A1 | 10-10-2024 | CN | 118779368 A | 15-10-2024 |
| | | EP | 4446948 A1 | 16-10-2024 |
| | | US | 11922328 B1 | 05-03-2024 |
| | | US | 2024338577 A1 | 10-10-2024 |
| US 2024419901 A1 | 19-12-2024 | NONE | | |

For more details about this annex : see Official Journal of the European Patent Office, No. 12/82